# FASCICULE DE BREVET EUROPEEN

(11) **EP 2 522 575 B1**
(45) Date de publication et mention de la délivrance du brevet: **12.08.2015**
(21) Numéro de dépôt: 12166919.6
(22) Date de dépôt: 07.05.2012
(51) Int. Cl.: B64D 27/26, B64D 29/06

(54) **Dispositif d'accrochage d'un moteur d'aéronef, comprenant des cales de serrage d'attache moteur à effet de coin**
Aufhängevorrichtung für ein Flugzeugtriebwerk, die mit Klammern zum Einkeilen der Motoraufhängung ausgestattet ist
Device for attaching an aircraft engine, comprising clamping wedges for engine attachment with corner effect

(30) Priorité: 12.05.2011 FR 1154129
(43) Date de publication de la demande: 14.11.2012
(73) Titulaire: Airbus Operations (Société par actions simplifiée), 31060 Toulouse (FR)
(72) Inventeur: Marche, Hervé, 31200 Toulouse (FR)
(74) Mandataire: Augarde, Eric

(56) Documents cités:
- EP-A1- 1 103 463
- EP-A1- 1 712 466
- EP-A1- 1 852 346
- FR-A1- 2 942 205

## Description

### DOMAINE TECHNIQUE

La présente invention se rapporte de façon générale à un dispositif d'accrochage d'un moteur d'aéronef, par exemple destiné à être interposé entre une voilure d'aéronef et le moteur concerné, ainsi qu'à un ensemble moteur comprenant un tel dispositif d'accrochage.

L'invention concerne également un procédé de fixation d'une attache moteur à une structure rigide d'un tel dispositif d'accrochage.

Elle peut être utilisée sur tout type d'aéronef équipé de turboréacteurs ou de turbopropulseurs.

Ce type de dispositif d'accrochage, également appelé mât d'accrochage ou « EMS » (de l'anglais « *Engine Mounting Structure* »), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

### ÉTAT DE LA TECHNIQUE ANTÉRIEURE

Un tel dispositif d'accrochage est en effet habituellement prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, qui est en général du type « caisson », c'est-à-dire formée par l'assemblage de longerons supérieurs et inférieurs et de longerons/panneaux latéraux raccordés entre eux par l'intermédiaire de nervures transversales.

D'autre part, le dispositif est muni de moyens d'accrochage interposés entre le turbomoteur et la structure rigide, ces moyens comportant en général deux attaches moteur, respectivement avant et arrière ainsi qu'un dispositif de reprise des efforts de poussée générés par le turbomoteur.

Chacune de ces attaches moteur comporte habituellement une platine, dénommée platine de liaison dans ce qui suit, destinée à la fixation de l'attache moteur sur la structure rigide précitée. Cette platine de liaison s'étend en général perpendiculairement à un plan médian de la structure rigide passant par l'axe du moteur. Autrement dit, dans le cas d'un dispositif d'accrochage d'un moteur suspendu au-dessous de la voilure de l'aéronef, la platine de liaison précitée s'étend horizontalement lorsque l'aéronef est à l'arrêt.

De plus, la structure rigide comporte deux platines, également dénommées platines de liaison dans ce qui suit, destinées à la fixation des platines de liaison des attaches moteur précitées.

EP 1103463 A1 divulgue les caractéristiques du préambule de la revendication 1.

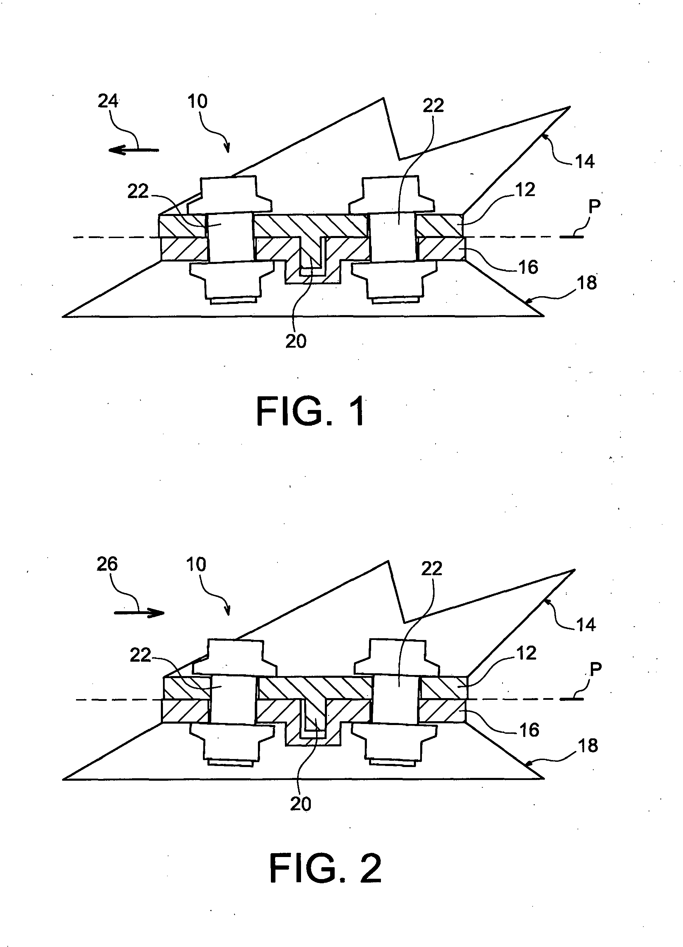

La figure 1 représente une partie d'un dispositif d'accrochage 10 d'un type connu, et montre plus particulièrement une platine de liaison 12 de la structure rigide 14 du dispositif ainsi qu'une platine de liaison 16 d'une attache moteur 18 de ce dispositif.

Comme l'illustre cette figure 1, les deux platines de liaison 12, 16 superposées sont centrées l'une par rapport à l'autre au moyen de pions de centrage 20, également dénommés « *spigots* », dont l'un est visible sur la figure 1, et ces platines sont fixées l'une à l'autre par des boulons de traction 22, par exemple au nombre de quatre. Les pions de centrage 20 permettent la transmission des efforts parallèles au plan P de la surface de contact entre les platines, tandis que les boulons de traction permettent essentiellement la reprise des efforts perpendiculaires à ce plan P.

Toutefois, ce type de configuration requiert l'utilisation de boulons de traction 22 relativement volumineux et massifs, et nécessite que soit appliqué à ces boulons un couple de serrage d'un niveau élevé, difficile à mettre en oeuvre par un seul opérateur, de sorte que le serrage de ces boulons est habituellement mis en oeuvre conjointement par deux opérateurs.

Par ailleurs, les boulons de traction 22 ne permettent pas une friction suffisante entre les platines de liaison 12, 16 pour empêcher un glissement relatif des platines dû au jeu de montage des pions de centrage précités. Or, un tel glissement, illustré symboliquement par les flèches 24 et 26 respectives des figures 1 et 2, provoque une usure de contact des platines, notamment lors de chaque décollage et atterrissage de l'avion.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un dispositif d'accrochage d'un moteur d'aéronef, comportant une structure rigide, au moins une attache moteur destinée à l'accrochage du moteur sur ladite structure rigide et comportant une platine de liaison superposée à une platine de liaison associée de ladite structure rigide, ainsi que des moyens de serrage mutuel desdites platines de liaison respectives de ladite attache moteur et de ladite structure rigide.

Selon l'invention, lesdits moyens de serrage comprennent au moins une cale de serrage à effet de coin ainsi que des surfaces d'appui correspondantes respectives desdites platines de liaison qui sont conformées de sorte que lorsque ladite cale de serrage est appliquée conjointement contre lesdites surfaces d'appui selon une direction parallèle au plan de la surface de contact entre ces deux platines de liaison, cette cale de serrage exerce par effet de coin une force de serrage de ces platines l'une contre l'autre selon une direction perpendiculaire audit plan.

Les cales à effet de coin permettent d'obtenir un serrage mutuel des platines de liaison respectives d'une attache moteur et de la structure rigide du dispositif ou mât d'accrochage, et permettent ainsi d'éviter le recours à des boulons de traction du type utilisé dans l'art antérieur.

L'invention offre ainsi un gain de masse et de volume, et permet en outre de faciliter le montage de l'attache moteur. En effet, le montage de cales à effet de coin ne requiert pas la mise en oeuvre d'un couple de serrage élevé comme c'était le cas avec les boulons de traction de l'art antérieur.

De plus, les cales de serrage à effet de coin, de par la définition-même de cet effet de coin, peuvent être agencées de manière à s'opposer à tout glissement relatif des platines de liaison l'une sur l'autre.

L'invention permet ainsi de limiter considérablement les risques d'usure de contact des platines de liaison précitées.

Il est à noter que le dispositif d'accrochage selon l'invention peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

Les cales de serrage précitées sont de préférence réalisées en métal, à l'instar des platines de liaison respectives de l'attache moteur et de la structure rigide du dispositif d'accrochage.

Dans ce cas, les surfaces d'appui précitées présentent de préférence un angle de 10 degrés environ par rapport au plan de la surface de contact entre ces deux platines.

Le dispositif d'accrochage comprend de préférence des moyens additionnels de mise sous contrainte de chaque cale de serrage à effet de coin faisant partie desdits moyens de serrage dudit dispositif.

Ces moyens de mise sous contrainte permettent de maintenir chaque cale de serrage appliquée contre les surfaces d'appui précitées des platines de liaison, et donc de garantir le serrage mutuel de ces platines.

L'effet de friction par contact entre chaque cale de serrage et les surfaces d'appui correspondantes peut contribuer au maintien de la cale en appui contre ces surfaces, et peut même être suffisant pour assurer à lui-seul un tel maintien. Les moyens additionnels de mise sous contrainte offrent dans tous les cas une sécurité supplémentaire contre tout risque de désolidarisation des deux platines de liaison.

Dans un premier mode de réalisation préféré de l'invention, lesdits moyens de mise sous contrainte de chaque cale de serrage comprennent des moyens de fixation de ladite cale à deux cales de serrage qui lui sont adjacentes.

Dans ce cas, la fixation des cales de serrage les unes aux autres permet de maintenir ces cales appliquées contre les surfaces d'appui correspondantes des platines de liaison, du fait d'une répartition adéquate de ces cales le long du chant de chaque platine de liaison.

A cet effet, lesdites cales de serrage à effet de coin sont de préférence conformées de sorte que l'ensemble de ces cales entoure entièrement le chant desdites platines de liaison.

D'une manière générale, l'invention selon ce premier mode de réalisation présente en particulier l'avantage de ne pas nécessiter la présence d'orifices de passage de vis de serrage dans les platines de liaison, en regard de chaque cale de serrage, ce qui permet d'optimiser la résistance de ces platines de liaison.

Chaque cale de serrage comporte avantageusement deux platines d'extrémité conçues pour être fixées aux platines d'extrémité correspondantes des deux cales adjacentes, par exemple par boulonnage.

Dans un deuxième mode de réalisation préféré de l'invention, lesdits moyens de mise sous contrainte de chaque cale de serrage à effet de coin comportent une vis de serrage qui est engagée dans un moyen taraudé solidaire de l'une au moins desdites platines de liaison de manière à maintenir ladite cale de serrage appliquée contre lesdites surfaces d'appui respectives desdites platines.

Chaque cale de serrage peut ainsi être serrée contre les surfaces d'appui correspondantes des platines de liaison, indépendamment des autres cales de serrage.

De plus, chaque cale de serrage peut être d'une étendue relativement limitée le long du chant de chaque platine de liaison, et donc d'une manière générale être relativement compacte et légère.

Dans le deuxième mode de réalisation préféré de l'invention, lesdites platines de liaison comportent chacune de préférence au moins un orifice traversant dans lequel est logé un écrou à barillet dans lequel est engagée ladite vis de serrage et qui forme ledit moyen taraudé.

L'écrou à barillet permet ainsi la retenue de la vis de serrage précitée, et donc de la cale de serrage correspondante.

Un tel écrou présente des avantages bien connus de l'homme du métier, dont notamment une grande facilité de contrôle de l'état de l'écrou du fait de la possibilité d'extraire aisément cet écrou hors de son orifice.

Dans le deuxième mode de réalisation préféré de l'invention, lesdites platines de liaison comportent avantageusement au moins un couple de rainures respectives disposées en regard l'une de l'autre de manière à former conjointement un canal de passage pour la vis de serrage précitée, ce canal débouchant dans ledit orifice traversant contenant l'écrou à barillet. Plus précisément, quand ledit écrou à barillet est en position à l'intérieur dudit orifice traversant, ledit canal de passage débouche dans un alésage interne dudit écrou à barillet destiné à recevoir ladite vis de serrage.

D'une manière générale, lesdites platines de liaison ayant la forme d'un quadrilatère, lesdits moyens de serrage comprennent avantageusement quatre cales de serrage à effet de coin agencées respectivement aux sommets dudit quadrilatère.

Cette configuration permet une bonne répartition des efforts de serrage des platines de liaison induits par les cales de serrage.

Par ailleurs, le dispositif d'accrochage comporte de préférence une attache moteur avant et une attache moteur arrière qui sont toutes deux équipées de cales de serrage du type décrit ci-dessus.

L'invention concerne également un ensemble moteur pour aéronef, comprenant un moteur ainsi qu'un dispositif d'accrochage de ce moteur, du type décrit ci-dessus.

L'invention concerne encore un aéronef, comprenant au moins un ensemble moteur du type décrit ci-dessus.

L'invention concerne enfin un procédé de fixation d'une attache moteur à la structure rigide d'un dispositif d'accrochage du type décrit ci-dessus, comprenant le serrage d'au moins une cale de serrage à effet de coin contre des surfaces d'appui respectives de deux platines de liaison superposées appartenant respectivement à ladite attache moteur et à ladite structure rigide de manière à obtenir par effet de coin un serrage mutuel desdites platines.

Le serrage de ladite cale de serrage à effet de coin peut être obtenu de différentes manières. Il peut n'être dû qu'à la friction entre la cale de serrage et les surfaces d'appui précitées, ou, de manière préférentielle, résulter de la mise en oeuvre de moyens de mise sous contrainte de la cale de serrage.

Comme expliqué ci-dessus, de tels moyens de mise sous contrainte peuvent comprendre des vis de serrage dont chacune est engagée simultanément dans une cale de serrage correspondante et dans des moyens taraudés solidaires des platines de liaison ou, en variante, des moyens de fixation de chaque cale de serrage à deux cales qui lui sont adjacentes.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- les figures 1 et 2, déjà décrites, sont des vues schématiques partielles en coupe longitudinale d'un dispositif d'accrochage d'un type connu ;
- la figure 3 est une vue schématique de côté d'un ensemble moteur pour aéronef, comprenant un dispositif d'accrochage selon un premier mode de réalisation préféré de la présente invention ;
- la figure 4 est une vue schématique partielle en coupe longitudinale du dispositif d'accrochage de la figure 3, illustrant très schématiquement le principe de l'invention ;

- la figure 5 est une vue schématique partielle en perspective du dispositif d'accrochage de la figure 3, montant les cales de serrage à effet de coin avant leur serrage ;
- la figure 6 est une vue semblable à la figure 5, montrant les cales de serrage à effet de coin après leur serrage ;
- la figure 7 est une vue schématique partielle en perspective d'un dispositif d'accrochage selon un deuxième mode de réalisation préféré de la présente invention.

Dans l'ensemble de ces figures, des références identiques peuvent désigner des éléments identiques ou analogues.

### EXPOSÉ DÉTAILLÉ DE MODES DE RÉALISATION PREFERES

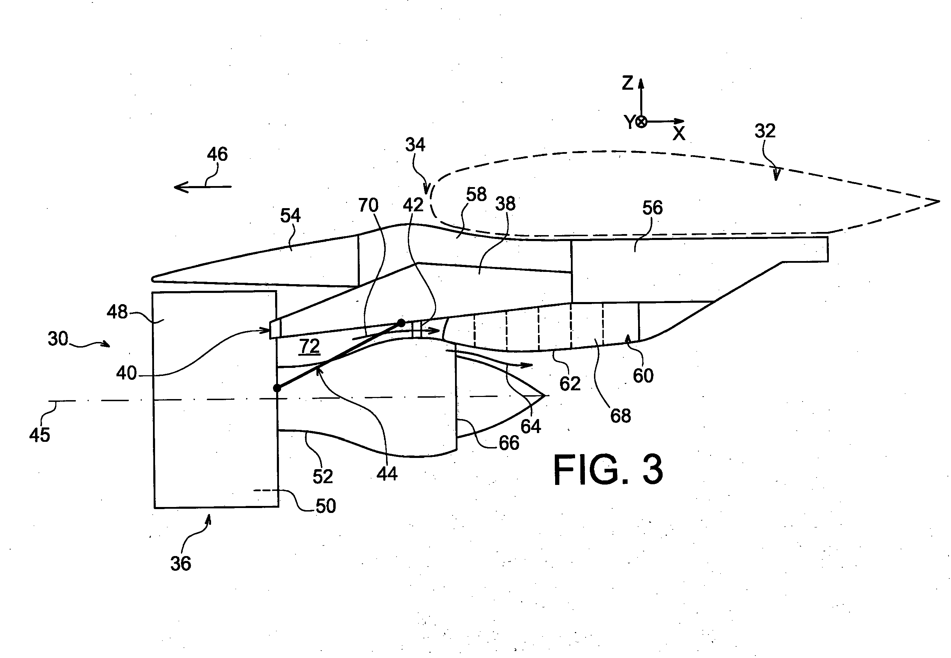

En référence à la figure 3, on voit un ensemble moteur 30 pour aéronef destiné à être fixé sous une aile 32 de cet aéronef, cet ensemble 30 comportant un dispositif ou mât d'accrochage 34 selon un premier mode de réalisation préféré de la présente invention, ainsi qu'un moteur 36, tel qu'un turboréacteur, accroché sous ce mât d'accrochage 34.

Globalement, le mât d'accrochage 34 comporte une structure rigide 38, également appelée structure primaire, et des moyens d'accrochage du moteur 36 à cette structure 38, ces moyens d'accrochage comprenant des attaches moteur 40, 42 ainsi qu'un dispositif 44 de reprise des efforts de poussée générés par le moteur 36.

A titre indicatif, il est noté que l'ensemble moteur 30 est destiné à être entouré d'une nacelle (non représentée), et que le mât d'accrochage 34 comporte une autre série d'attaches (non représentées) rapportées sur la structure rigide 38 et permettant d'assurer la suspension de cet ensemble 30 sous la voilure 32 de l'aéronef.

Dans toute la description qui va suivre, par convention, on appelle X la direction longitudinale du dispositif 34, qui est également assimilable à la direction longitudinale du moteur 36, cette direction X étant parallèle à un axe longitudinal 45 de ce moteur 36. D'autre part, on appelle Y la direction orientée transversalement par rapport au dispositif d'accrochage 34 et également assimilable à la direction transversale du moteur 36, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le moteur 36, cette direction étant symbolisée par la flèche 46.

Sur la figure 3, on peut donc voir les deux attaches moteur 40, 42, le dispositif de reprise des efforts de poussée 44, la structure rigide 38, ainsi qu'une pluralité de structures secondaires rapportées sur la structure rigide 38. Ces structures secondaires assurent la ségrégation et le maintien des systèmes tout en supportant des éléments de carénage aérodynamique et seront décrites ci-après.

Il est indiqué que le moteur 36 dispose à l'avant d'un carter de soufflante 48 de grande dimension délimitant un canal annulaire de soufflante 50, et comporte vers l'arrière un carter central 52 de plus petite dimension, renfermant le coeur de ce moteur. Les carters 48 et 52 sont bien entendu solidaires l'un de l'autre.

Dans l'exemple décrit sur cette figure 3, la structure rigide 38 prend la forme d'un caisson s'étendant de l'arrière vers l'avant, sensiblement selon la direction X. Le caisson 38 prend alors la forme d'un mât de conception similaire à celle habituellement observée pour les mâts d'accrochage de moteurs, notamment en ce sens qu'il est pourvu de nervures transversales (non représentées) prenant chacune la forme d'un rectangle orienté dans un plan YZ.

Comme on peut l'apercevoir sur la figure 3, les attaches moteur 40, 42 du mât d'accrochage 34 sont prévues au nombre de deux, et respectivement dénommées attache moteur avant 40 et attache moteur arrière 42.

L'attache moteur avant 40 est interposée entre une extrémité avant de la structure rigide 38, également appelée pyramide, et une partie supérieure du carter de soufflante 48.

D'autre part, l'attache moteur arrière 42 est quant à elle interposée entre la structure rigide 38 et le carter central 52.

Ces deux attaches moteur 40 et 42 seront décrites plus en détail dans ce qui suit.

Toujours en référence à la figure 3, on compte parmi les structures secondaires du mât 34 une structure aérodynamique avant 54, une structure aérodynamique arrière 56, un carénage de raccordement 58 des structures aérodynamiques avant et arrière, et un carénage aérodynamique arrière inférieur 60.

Globalement, ces structures secondaires sont des éléments classiques identiques ou similaires à ceux rencontrés dans l'art antérieur, et connus de l'homme du métier.

Plus précisément, la structure aérodynamique avant 54 est placée dans le prolongement avant inférieur de la voilure 32 et au-dessus de la structure rigide 38. Elle est montée fixement sur cette structure rigide 38, et présente une fonction de profil aérodynamique entre une partie supérieure des capots de soufflante articulés sur celle-ci, et le bord d'attaque de la voilure. Cette structure aérodynamique avant 54 dispose non seulement d'une fonction de carénage aérodynamique, mais permet également la mise en place, la ségrégation et le cheminement de différents systèmes (air, électrique, hydraulique, carburant).

Directement dans le prolongement arrière de cette structure avant 54, toujours sous la voilure et monté au-dessus de la structure rigide 38, se trouve le carénage de raccordement 58, également appelé « karman ». Ensuite, toujours vers l'arrière, le carénage de raccordement 58 est prolongé par la structure aérodynamique arrière 56, dite *RSS,* qui contient une partie des équipements du mât 34. Cette structure 56 est de préférence située entièrement en arrière par rapport à la structure rigide 38, et est donc attachée sous la voilure de l'aéronef.

Enfin, sous la structure rigide 38 et la structure aérodynamique arrière 56, se trouve le carénage aérodynamique arrière inférieur 60, également appelé « bouclier » ou « *Aft Pylon Fairing* ». Ses fonctions essentielles sont la formation d'une barrière thermique servant à protéger le mât 34 et la voilure 32 de la chaleur dégagée par le flux primaire du moteur 36, et la formation d'une continuité aérodynamique entre la sortie du moteur 36 et le mât d'accrochage 34.

De manière connue de l'homme du métier, le carénage 60 précité comporte un plancher de protection thermique 62 pourvu d'une surface extérieure destinée à être épousée par un flux primaire 64, s'échappant de la tuyère 66 du moteur, qu'il délimite partiellement radialement vers l'extérieur. Par ailleurs, le carénage 60 comporte aussi deux panneaux latéraux 68 qui sont quant à eux prévus pour être épousés extérieurement par un flux secondaire 70 du moteur, en raison de leur implantation dans le canal annulaire 72 de flux secondaire du moteur, et/ou en sortie de celui-ci.

Les attaches moteur 40, 42 et leur fixation à la structure rigide 38 du mât d'accrochage 34 vont maintenant être décrites plus en détail.

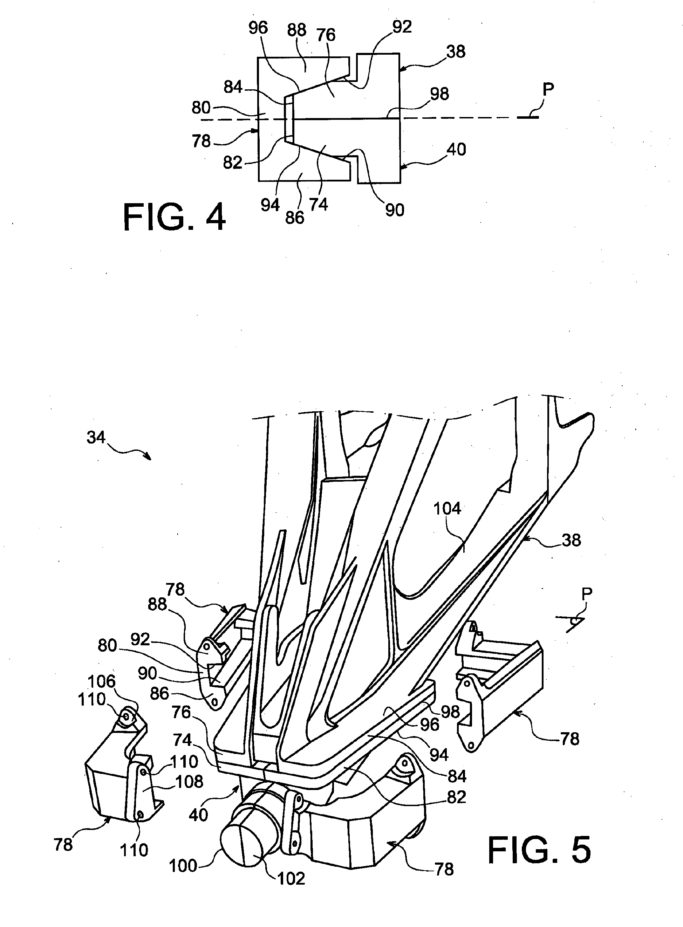

La figure 4 illustre tout d'abord le principe général de l'invention, selon lequel, chaque attache moteur 40, 42 étant pourvue d'une platine de liaison 74 superposée à une platine de liaison correspondante 76 de la structure rigide 38 du mât d'accrochage 34, les platines de liaison 74, 76 précitées sont serrées l'une à l'autre au moyen d'au moins une cale de serrage à effet de coin 78 qui, lorsqu'elle est appliquée latéralement contre les platines de liaison 74, 76, provoque un serrage mutuel de ces platines.

A cet effet, la cale de serrage 78 présente une paroi de fond 80 s'étendant globalement de manière parallèle aux chants 82, 84 respectifs des platines de liaison 74, 76 de l'attache moteur 40 et de la structure rigide 38, ainsi que deux mâchoires de serrage 86, 88 s'étendant depuis la paroi de fond 80 en direction des platines de liaison 74, 76 et présentant des surfaces d'appui inclinées respectives 90, 92 qui sont appliquées sur des surfaces d'appui complémentaires 94, 96 respectives des platines de liaison 74, 76, de manière à induire le serrage des platines par effet de coin. Il est à noter que la surface d'appui 94, 96 de chaque platine de liaison 74, 76 est raccordée au bord du chant 82, 84 de la platine qui est opposé à la surface de contact 98 entre les deux platines de liaison 74, 76.

Dans l'exemple représenté sur la figure 4, les surfaces d'appui 90, 92 de la cale de serrage 78 font un angle de 10 degrés environ avec le plan P de la surface de contact 98 entre les platines de liaison 74, 76 précitées, et sont symétriques par rapport à ce plan P.

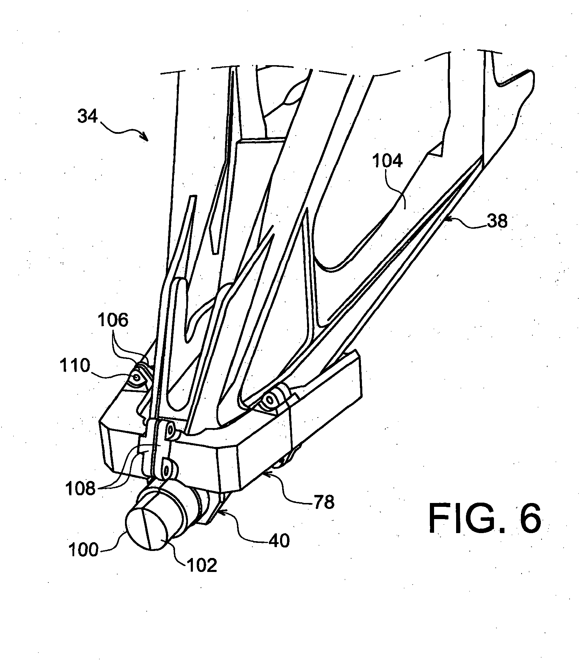

Ce principe général de l'invention va maintenant être décrit plus en détail dans le cas particulier d'une attache moteur avant 40 du mât d'accrochage 34, représentée sur les figures 5 et 6, étant entendu que ce principe peut être appliqué d'une manière analogue à l'attache moteur arrière 42.

Comme cela apparaît sur la figure 5, l'attache moteur avant 40 comporte globalement des moyens 100 d'accrochage au carter de soufflante 48 du moteur 36, ainsi que la platine de liaison 74.

Les moyens d'accrochage 100 comprennent par exemple un pion longitudinal 102 destiné à la reprise des efforts transversaux véhiculés par le moteur 36, d'une manière connue en soi.

L'attache moteur 40 est destinée à se fixer sur la platine de liaison 76 formée au niveau de l'extrémité avant ou pyramide de la structure rigide 38 du mât d'accrochage 34 et solidaire de longerons 104 de cette structure, comme cela apparaîtra plus clairement dans ce qui suit.

Chacune des platines de liaison 74, 76 présente globalement une forme de quadrilatère, et plus précisément de trapèze. De plus, chaque platine de liaison 74, 76 présente une surface d'appui inclinée 94, 96 s'étendant sur tout le pourtour de la platine et raccordée au chant 82, 84 de la platine.

Afin de permettre le serrage des deux platines de liaison 74, 76 superposées l'une contre l'autre, le mât d'accrochage 34 comporte quatre cales de serrage à effet de coin 78.

Ces quatre cales de serrage 78 présentent, en coupe selon un plan parallèle au plan P de la surface 98 de contact entre les deux platines de liaison 74, 76, une forme conjuguée respectivement des quatre coins de l'ensemble formé par les deux platines 74, 76 superposées. En coupe transversale, chacune de ces cales de serrage 78 présente une conformation analogue à celle de la cale 78 de la figure 4, définissant deux mâchoires de serrage 86, 88 présentant deux surfaces d'appui inclinées respectives 90, 92. De plus, chaque cale de serrage 78 comporte deux platines d'extrémité 106, 108 formées respectivement aux deux extrémités opposées de la cale de serrage et destinées à la fixation de cette cale aux deux cales de serrage 78 qui lui sont adjacentes, par exemple au moyen de boulons. A cet effet, chaque platine d'extrémité précitée comporte par exemple deux orifices 110 de passage de boulon.

La figure 6 illustre l'extrémité avant de la structure rigide 38 du mât d'accrochage 34 avec les quatre cales de serrage à effet de coin 78 en position de serrage, c'est-à-dire fixées les unes aux autres par leurs deux platines d'extrémité 106, 108 respectives, et assurant ainsi un serrage mutuel par effet de coin des platines de liaison 74, 76 respectives de l'attache moteur avant 40 et de la structure rigide 38. Il apparaît clairement sur cette figure que la fixation des cales de serrage 78 les une aux autres provoque l'engagement des platines de liaison 74, 76 entre les deux mâchoires 86, 88 de chaque cale de serrage 78 et le serrage des quatre cales de serrage 78 sur les deux platines de liaison 74, 76.

Il est à noter que les platines d'extrémité 106, 108 des cales de serrage 78 et leurs boulons associés forment des moyens de mise sous contrainte des cales de serrage 78, au sens de la terminologie de la présente invention.

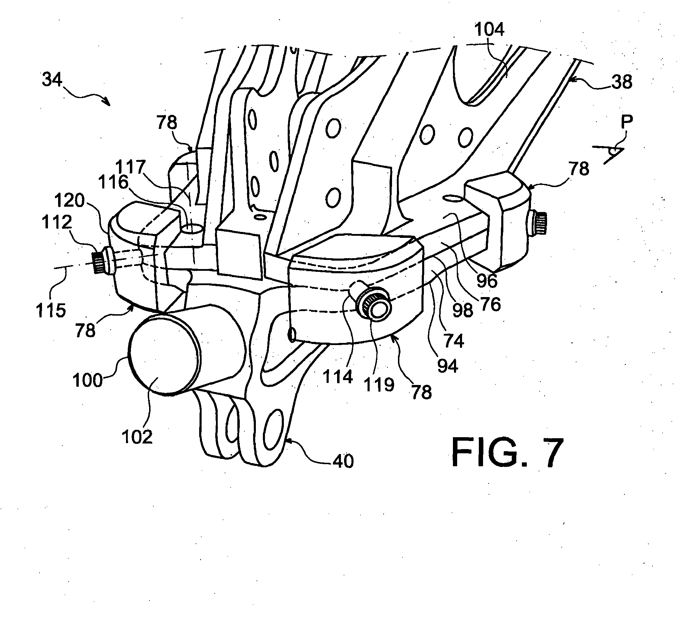

La figure 7 illustre un mât d'accrochage 34 selon un deuxième mode de réalisation préféré de la présente invention, qui diffère du mât 34 décrit ci-dessus par la configuration des cales de serrage 78 de ses attaches moteur.

Cette figure 7 représente plus particulièrement l'attache moteur avant 40 fixée sur l'extrémité avant, ou pyramide, de la structure rigide 38 du mât d'accrochage 34.

Les cales de serrage 78 selon ce deuxième mode de réalisation ne sont pas fixées les unes aux autres et ne comportent donc pas de platines d'extrémité du type décrit ci-dessus.

En revanche, ces cales de serrage 78 comprennent des vis de serrage 112 retenues dans l'ensemble formé par les deux platines de liaison 74, 76 de manière à garantir la mise sous contrainte des cales et donc le serrage mutuel de ces platines de liaison.

Plus précisément, les deux platines de liaison 74, 76 ont encore une forme globale de trapèze, mais présentant des sommets arrondis. Les cales de serrage 78 sont donc appliquées contre des surfaces d'appui inclinées 94, 96 qui apparaissent incurvées lorsqu'elles sont observées en section selon le plan P de la surface 98 de contact entre les deux platines 74, 76 précitées. A cet effet, les surfaces d'appui 90, 92 de chaque cale de serrage 78, qui sont de forme complémentaire à celle des surfaces d'appui 94, 96 des platines de liaison, sont donc également incurvées.

Les deux platines de liaison 74, 76 présentent, au niveau de chacun de leurs sommets arrondis, deux rainures respectives qui sont formées en regard l'une de l'autre de manière définir un canal 114 de passage de vis de serrage, pour lequel le plan P précité est un plan de symétrie, et qui débouche dans un canal traversant 116 d'axe 117 perpendiculaire au plan P, formé par deux orifices traversants respectifs des deux platines de liaison 74, 76, et dans lequel est logé un écrou à barillet (non visible sur la figure 7). Il est rappelé qu'un écrou à barillet est d'une manière générale un écrou qui présente une surface extérieure cylindrique dont l'axe est perpendiculaire à l'axe du trou taraudé qui la traverse. Dans le cas présent, l'axe de la surface cylindrique coïncide avec l'axe du canal traversant 116, et l'axe du trou taraudé de l'écrou à barillet coïncide avec l'axe 115 du canal de passage de vis de serrage 114.

Chacune des cales de serrage 78 comporte un orifice traversant d'axe parallèle au plan P précité et confondu avec l'axe 115 d'un canal de passage de vis de serrage 114 correspondant, dans lequel s'étend la vis de serrage 112 correspondante. Cette vis de serrage 112 comporte une tête 119 en appui contre une surface extérieure 120 de la cale de serrage 78, et une partie filetée s'étendant dans le canal de passage de vis 114 correspondant et engagée dans l'écrou à barillet correspondant, de manière à serrer la cale de serrage 78 contre les surfaces d'appui inclinées respectives 94, 96 des platines de liaison 74, 76.

Bien entendu, diverses modifications peuvent être apportées par l'homme du métier au mât d'accrochage 34 décrit ci-dessus à titre d'exemple non limitatif, sans sortir du cadre de la présente invention.

Ainsi, lorsque l'état de rugosité des surfaces inclinées 90, 92, 94, 96 de contact entre les cales de serrage 78 et les platines de liaison 74, 76 ainsi que l'angle d'inclinaison de ces surfaces sont tels qu'un engagement des cales de serrage 78 sur les platines précitées n'est pas réversible, c'est-à-dire qu'un choc sur les cales de serrage 78 serait nécessaire pour libérer ces dernières, la friction observée au niveau de ces surfaces de contact peut être suffisante à elle-seule pour maintenir les cales de serrage 78 sous contrainte, de sorte que le mât d'accrochage peut alors être dépourvu de moyens additionnels de mise sous contrainte des cales tels que les boulons et platines de fixation des cales l'une sur l'autre ou les vis de serrage décrits ci-dessus. Pour des raisons de sécurité, il reste cependant préférable d'équiper les cales de serrage 78 de moyens additionnels de mise sous contrainte comme décrit ci-dessus.

De plus, les platines de liaison 74, 76 peuvent comporter des pions de centrage analogues à ceux décrits sur les figures 1 et 2, de manière à permettre un montage plus aisé de l'attache moteur 40 sur la structure rigide 38. Il est à noter que dans ce cas, ces pions de centrage ne participent pas à la reprise d'efforts parallèles au plan P précité comme dans les dispositifs de l'art antérieur, étant donné que ces efforts sont maintenant repris par les cales de serrage 78.

## Revendications

1. Dispositif d'accrochage (34) d'un moteur d'aéronef, comportant une structure rigide (38), au moins une attache moteur (40, 42) destinée à l'accrochage du moteur sur ladite structure rigide (38) et comportant une platine de liaison (74) superposée à une platine de liaison associée (76) de ladite structure rigide (38), ainsi que des moyens de serrage mutuel desdites platines de liaison (74, 76) respectives de ladite attache moteur (40, 42) et de ladite structure rigide (38), **caractérisé en ce que** lesdits moyens de serrage comprennent au moins une cale de serrage à effet de coin (78) ainsi que des surfaces d'appui correspondantes (94, 96) respectives desdites platines de liaison (74, 76) qui sont conformées de sorte que lorsque chaque cale de serrage (78) est appliquée conjointement contre lesdites surfaces d'appui (94, 96) selon une direction parallèle au plan (P) de la surface (98) de contact entre ces deux platines de liaison (74, 76), cette cale de serrage (78) exerce par effet de coin une force de serrage de ces platines de liaison l'une contre l'autre selon une direction perpendiculaire audit plan (P).

2. Dispositif selon la revendication 1, **caractérisé en ce qu'**il comprend des moyens additionnels (106, 108, 110, 112, 114, 116) de mise sous contrainte de chaque cale de serrage à effet de coin (78) faisant partie desdits moyens de serrage dudit dispositif (34).

3. Dispositif selon la revendication 2, **caractérisé en ce que** lesdits moyens de mise sous contrainte de chaque cale de serrage à effet de coin (78) comprennent des moyens (106, 108, 110) de fixation de ladite cale à deux cales de serrage (78) qui lui sont adjacentes.

4. Dispositif selon la revendication 2, **caractérisé en ce que** lesdits moyens de mise sous contrainte de chaque cale de serrage à effet de coin (78) comportent une vis de serrage (112) qui est engagée dans un moyen taraudé solidaire de l'une au moins desdites platines de liaison (74, 76) de manière à maintenir ladite cale de serrage (78) appliquée contre lesdites surfaces d'appui (94, 96) respectives desdites platines de liaison.

5. Dispositif selon la revendication 4, **caractérisé en ce que** lesdites platines de liaison (74, 76) comportent chacune au moins un orifice traversant (116) dans lequel est logé un écrou à barillet dans lequel est engagée ladite vis de serrage (112) et qui forme ledit moyen taraudé.

6. Dispositif selon l'une quelconque des revendications 1 à 5, **caractérisé en ce que**, lesdites platines de liaison (74, 76) ayant la forme d'un quadrilatère, lesdits moyens de serrage comprennent quatre cales de serrage à effet de coin (78) agencées respectivement aux sommets dudit quadrilatère.

7. Ensemble moteur (30) pour aéronef, comprenant un moteur et un dispositif d'accrochage (34) de ce moteur, **caractérisé en ce que** ledit dispositif d'accrochage (34) est un dispositif selon l'une quelconque des revendications précédentes.

8. Aéronef, **caractérisé en ce qu'**il comprend au moins un ensemble moteur (30) selon la revendication précédente.

9. Procédé de fixation d'une attache moteur (40, 42) à la structure rigide (38) d'un dispositif d'accrochage (34) selon l'une quelconque des revendications 1 à 6, **caractérisé en ce qu'**il comprend le serrage d'au moins une cale de serrage à effet de coin (78) contre les surfaces d'appui (94, 96) respectives des deux platines de liaison (74, 76) superposées appartenant respectivement à ladite attache moteur (40, 42) et à ladite structure rigide (38) de manière à obtenir par effet de coin un serrage mutuel desdites platines de liaison.

## Patentansprüche

1. Aufhängevorrichtung (34) eines Luftfahrzeugmotors, die eine steife Struktur (38), mindestens eine Motoraufhängung (40, 42), die zur Aufhängung des Motors an der steifen Struktur (38) bestimmt ist und eine Verbindungsplatte (74) aufweist, die eine zugeordnete Verbindungsplatte (76) der steifen Struktur (38) überlagert, sowie Einrichtungen zum gegenseitigen Festklemmen der Verbindungsplatten (74, 76) der Motoraufhängung (40, 42) bzw. der steifen Struktur (38) aufweist, **dadurch gekennzeichnet, dass** die Klemmeinrichtungen mindestens einen Klemmkeil mit Keilwirkung (78) sowie entsprechende Auflageflächen (94, 96) der Verbindungsplatten (74, 76) enthalten, die so gestaltet sind, dass, wenn jeder Klemmkeil (78) gemeinsam gegen die Auflageflächen (94, 96) gemäß einer Richtung parallel zur Ebene (P) der Kontaktfläche (98) zwischen diesen zwei Verbindungsplatten (74, 76) angelegt wird, dieser Klemmkeil (78) durch Keilwirkung eine Klemmkraft dieser Verbindungsplatten gegeneinander gemäß einer Richtung lotrecht zur Ebene (P) ausübt.

2. Vorrichtung nach Anspruch 1, **dadurch gekennzeichnet, dass** sie zusätzliche Einrichtungen (106, 108, 110, 112, 114, 116) zum Unterspannungsetzen jedes Klemmkeils mit Keilwirkung (78) enthält, die Teil der Klemmeinrichtungen der Vorrichtung (34) sind.

3. Vorrichtung nach Anspruch 2, **dadurch gekennzeichnet, dass** die Einrichtungen zum Unterspannungsetzen jedes Klemmkeils mit Keilwirkung (78) Einrichtungen (106, 108, 110) zur Befestigung des Keils an zwei Klemmkeilen (78) enthalten, die ihm benachbart sind.

4. Vorrichtung nach Anspruch 2, **dadurch gekennzeichnet, dass** die Einrichtungen zum Unterspannungsetzen jedes Klemmkeils mit Keilwirkung (78) eine Klemmschraube (112) aufweisen, die in eine mit einer der Verbindungsplatten (74, 76) fest verbundene Einrichtung mit Innengewinde eingeführt wird, um den Klemmkeil (78) gegen die Auflageflächen (94, 96) der Verbindungsplatten angelegt zu halten.

5. Vorrichtung nach Anspruch 4, **dadurch gekennzeichnet, dass** die Verbindungsplatten (74, 76) je mindestens eine Durchgangsöffnung (116) aufweisen, in der sich eine Spannschlossmutter befindet, in die die Klemmschraube (112) eingeführt ist und die die Einrichtung mit Innengewinde formt.

6. Vorrichtung nach einem der Ansprüche 1 bis 5, **dadurch gekennzeichnet, dass**, da die Verbindungsplatten (74, 76) die Form eines Vierecks haben, die Klemmeinrichtungen vier Klemmkeile mit Keilwirkung (78) enthalten, die je an den Spitzen des Vierecks angeordnet sind.

7. Motoreinheit (30) für ein Luftfahrzeug, die einen Motor und eine Aufhängevorrichtung (34) dieses Motors enthält, **dadurch gekennzeichnet, dass** die Aufhängevorrichtung (34) eine Vorrichtung nach einem der vorhergehenden Ansprüche ist.

8. Luftfahrzeug, **dadurch gekennzeichnet, dass** es mindestens eine Motoreinheit (30) nach dem vorhergehenden Anspruch enthält.

9. Verfahren zur Befestigung einer Motoraufhängung (40, 42) an der steifen Struktur (38) einer Aufhängevorrichtung (34) nach einem der Ansprüche 1 bis 6, **dadurch gekennzeichnet, dass** es das Klemmen mindestens eines Klemmkeils mit Keilwirkung (78) gegen die Auflageflächen (94, 96) der zwei übereinander angeordneten Verbindungsplatten (74, 76) enthält, die zur Motoraufhängung (40, 42) bzw. zur steifen Struktur (38) gehören, um durch Keilwirkung ein gegenseitiges Festklemmen der Verbindungsplatten zu erhalten.

## Claims

1. A device (34) for mounting an aircraft engine, including a rigid structure (38), at least one engine attachment (40, 42) intended for attaching the engine on said rigid structure (38) and including a connecting plate (74) superposed to an associated connecting plate (76) of said rigid structure (38), as well as means for mutual tightening of said respective connecting plates (74, 76) of said engine attachment (40, 42) and of said rigid structure (38), **characterized in that** said tightening means comprise at least one wedge-effect tightening block (78) as well as corresponding respective bearing surfaces (94, 96) of said connecting plates (74, 76) which are conformed so that, when each tightening block (78) is jointly applied against said bearing surfaces (94, 96) along a direction parallel to the plane (P) of a contact surface (98) between both of these connecting plates (74, 76), this tightening block (78) exerts by a wedge-effect a force for tightening these connecting plates against each other along a direction perpendicular to said plane (P).

2. The device according to claim 1, **characterized in that** it comprises additional means (106, 108, 110, 112, 114, 116) for tensioning each of said wedge-effect tightening block (78) belonging to the tightening means of said device (34).

3. The device according to claim 2, **characterized in that** said means for tensioning each wedge-effect tightening block (78) comprise means (106, 108, 110) for fixing said block to two wedge-effect tightening blocks (78) which are adjacent to it.

4. The device according to claim 2, **characterized in that** said means for tensioning each wedge-effect tightening block (78) include a tight-fitting screw (112) which is engaged into a tapped means secured to at least one of said connecting plates (74, 76) so as to maintain said tightening block (78) applied against said respective bearing surfaces (94, 96) of said connecting plates.

5. The device according to claim 4, **characterized in that** said connecting plates (74, 76) each include at least one through-orifice (116) in which is accommodated a barrel nut into which said tight-fitting screw (112) is engaged and which forms said tapped means.

6. The device according to any of claims 1 to 5, **characterized in that**, as said connecting plates (74, 76) have the shape of a quadrilateral, said tightening means comprise four wedge-effect tightening blocks (78) respectively laid out at the apices of said quadrilateral.

7. An engine assembly (30) for an aircraft, comprising an engine and a device (34) for mounting this engine, **characterized in that** said mounting device (34) is a device according to any of the preceding claims.

8. An aircraft **characterized in that** it comprises at least one engine assembly (30) according to the preceding claim.

9. A method for attaching an engine attachment (40, 42) to the rigid structure (38) of a mounting device (34) according to any of claims 1 to 6, **characterized in that** it comprises the tightening of at least one wedge-effect tightening block (78) against the respective bearing surfaces (94, 96) of both superposed connecting plates (74, 76) respectively belonging to said engine attachment (40, 42) and to said rigid structure (38) so as to obtain by a wedge-effect mutual tightening of said connecting plates.
